Europäisches Patentamt

(19) European Patent Office

Office européen des brevets

(11) Numéro de publication : **0 296 034 B1**

(12) **FASCICULE DE BREVET EUROPEEN**

(45) Date de publication du fascicule du brevet :
17.07.91 Bulletin 91/29

(51) Int. Cl.⁵ : **G01L 9/12**

(21) Numéro de dépôt : **88401418.4**

(22) Date de dépôt : **10.06.88**

(54) Procédé de fabrication collective de capteurs de pression capacitifs.

(30) Priorité : **12.06.87 FR 8708178**

(43) Date de publication de la demande :
**21.12.88 Bulletin 88/51**

(45) Mention de la délivrance du brevet :
**17.07.91 Bulletin 91/29**

(84) Etats contractants désignés :
**CH DE IT LI**

(56) Documents cités :
**US-A- 4 581 676
INGENIEURS DE L'AUTOMOBILE, juillet-août
1986, pages 44-47, Courbevoie, FR; G. BLAS-
QUEZ et al.: "Capteur de pression capacitif
micro-électronique"**

(73) Titulaire : **REGIE NATIONALE DES USINES
RENAULT
Boîte postale 103 8-10 avenue Emile Zola
F-92109 Boulogne-Billancourt (FR)**

(72) Inventeur : **Cantaloup, Sylvie
53, rue Galliéni
F-92100 Boulogne Billancourt (FR)**
Inventeur : **Gewiss, Jean-Claude
27, Avenue des Cèdres
F-92410 Ville d'Avray (FR)**

(74) Mandataire : **Ernst-Schonberg, Michel et al
REGIE NATIONALE DES USINES RENAULT
SA, Sce 0267, 860, quai de Stalingrad
F-92109 Boulogne Billancourt Cédex (FR)**

## Description

La présente invention concerne un procédé de fabrication collective de capteurs de pression capacitifs en silicium et son application particulière à la réalisation d'un certain type de capteurs.

Un capteur de pression capacitif en silicium, comme représenté selon une coupe transversale sur la figure 1 est connu par le brevet US 4 581 676. Il est constitué généralement par une plaquette 1 de silicium dans laquelle a été réalisée (par micro-usinage) une membrane flexible 2 qui constitue l'une des plaques d'un condensateur variable. Une plaquette de verre 3 comportant une électrode métallisée 4 sur une première face 5 est placée en regard de la plaquette de silicium, de façon que l'électrode 4 soit la seconde plaque du condensateur variable. Comme une liaison intime doit être réalisée entre la plaquette de silicium 1 et la plaquette de verre 3, le signal de sortie du condensateur est prélevé à l'extérieur du capteur, sur une métallisation 6 déposée sur la seconde face 7 du verre et reliée à l'électrode 4 par un trou métallisé 8. Comme on connait la pression dans la cavité formant le condensateur, pression qui peut être nulle si on a fait le vide, le signal de sortie donne une mesure absolue de la pression appliquée sur la membrane.

Pour souder par soudure électrostatique, les deux plaquettes 1 et 3 respectivement de silicium et de verre, qui doivent être scellées ensemble, elles doivent être soumises à une haute tension après avoir été portées à une température élevée. On doit soumettre la plaquette de silicium 1 à une tension positive de sorte que les charges positives dopant le silicium migrent vers la plaquette de verre 3 et la plaquette de verre 3 doit être soumise à une tension négative de sorte que les charges positives du verre migrent vers la surface polarisée négativement, créant une accumulation de charges négatives à la surface du verre en contact avec le silicium, les deux plaquettes 1 et 3 étant alors scellées par attraction électrostatique. A cause des métallisations réalisées sur les deux faces de la plaquette de verre, une telle soudure électrostatique est impossible.

Les inconvénients de ce procédé de soudure électrostatique viennent de ce que la tension négative peut passer par le trou 8 du verre pouvant provoquer un claquage entre les électrodes du condensateur, d'une part, et d'autre part, de ce que la membrane flexible 2 en silicium peut se coller sur la plaquette de verre 3.

L'invention a pour but de résoudre ces inconvénients en proposant un procédé de fabrication collective de capteurs de pression capacitifs en silicium à partir d'une plaquette de silicium dans laquelle sont réalisées des membranes sensibles à la pression et d'une plaquette de verre comportant des électrodes métallisées sur une première de ses faces qui sont reliées sur l'autre face par des trous métallisés à des métallisations, comportant une première étape de mise en contact des deux plaquettes de façon à faire coïncider chaque membrane avec chaque électrode, caractérisé en ce qu'il comporte de plus les étapes suivantes :

- mise en place, sur la seconde face de la plaquette de verre d'une plaquette de silicium, dans laquelle ont été micro-usinées des ouvertures selon le motif des métallisations de la seconde face de la plaquette de verre et de dimensions supérieures, en faisant coïncider ces ouvertures avec les métallisations du verre ;
- soudure thermo-électrique à l'aide d'au moins une plaque métallique placée contre la première plaquette de silicium, portée à une température élevée et soumise à une haute tension ;
- retrait de la seconde plaquette de silicium et de la plaque métallique ;
- découpe collective des capteurs.

Selon une autre caractéristique, ce procédé permet de fabriquer collectivement des capteurs capacitifs de pression absolue lorsqu'il est réalisé dans une enceinte sous-vide.

L'invention porte également sur un procédé de fabrication collective de capteurs de pression capacitifs constitués de deux condensateurs en série et sur ce type nouveau de capteur.

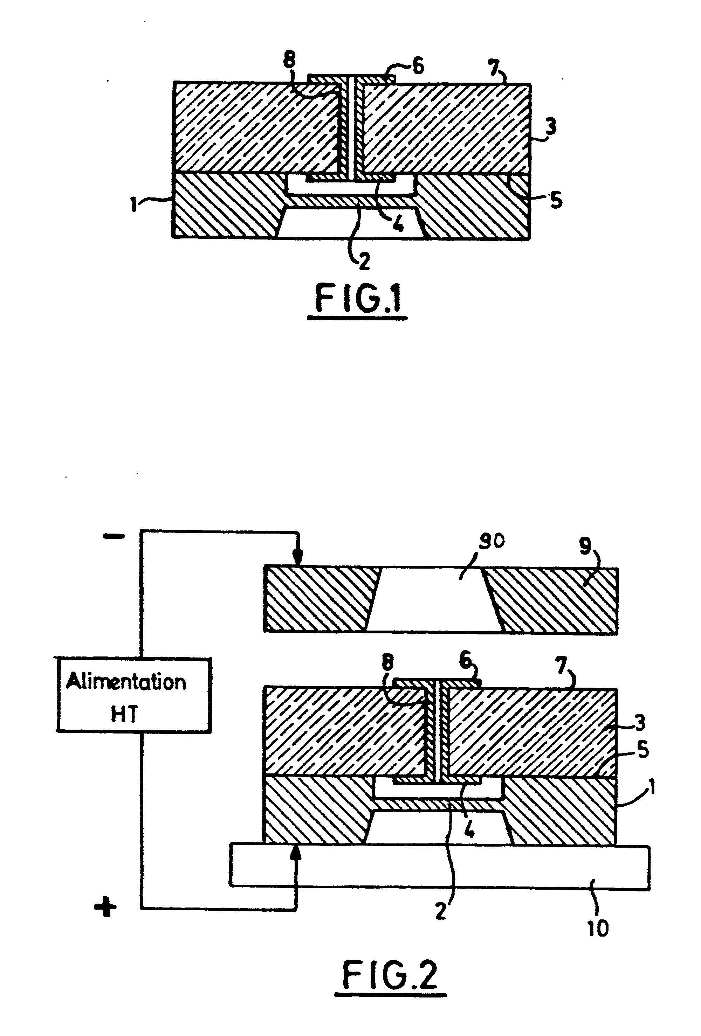

D'autres caractéristiques et avantages de l'invention apparaitront dans la description qui suit, illustrée par les figures suivantes qui, outre la figure 1 déjà décrite représentant un mode de réalisation d'un capteur de pression capacitif selon l'art antérieur, représentent :

- la figure 2 : le dispositif de mise en oeuvre du procédé de fabrication selon l'invention ;
- la figure 3 : le dispositif de mise en oeuvre du procédé pour fabriquer des capteurs de pression capacitifs d'un type nouveau.

Sur la figure 2 est représenté en coupe longitudinale le dispositif mettant en oeuvre le procédé de fabrication, objet de l'invention. Ce procédé peut s'appliquer tant à la fabrication collective de nombreux capteurs de pression qu'à la fabrication d'un seul capteur tel que sur la figure 2.

Comme sur la figure précédente, on retrouve la plaquette de silicium 1 de faible épaisseur, dans laquelle a été micro-usinée une membrane flexible 2 sensible à la pression et la plaquette de verre 3 de faible épaisseur comportant l'électrode métallisée 4 située en regard de la membrane 2 pour former les armatures d'un condensateur. Ces deux plaquettes 1 et 3 sont mises en contact de telle manière que la membrane 2 coïncide avec l'électrode 4.

Sur la face 7 de la plaquette de verre 3, opposée à celle 5 supportant l'électrode 4, on vient poser une plaquette de silicium 9 micro-usinée sur toute son épaisseur suivant le motif choisi pour les métallisations 6 de la plaquette de verre 3 et selon les dimensions légèrement supérieures à celles de ces métallisations. Les ouvertures 90 de cette plaquette 9 doivent coïncider avec les métallisations 6.

Puis, on place au moins une plaque métallique chauffante 10 contre la première plaquette de silicium 1 et on soumet l'ensemble ainsi constitué à une haute tension de façon à porter la plaquette de silicium 1 du capteur à une tension positive et la plaquette de verre 3 par l'intermédiaire de la plaquette silicium 10, à une tension négative.

En polarisant ainsi négativement le silicium du capteur de pression par rapport au verre et en soumettant l'ensemble à une température élevée, on réalise le scellement de l'interface du verre et du silicium par soudure dite thermo-électrique.

Cette étape de soudure peut être mise en oeuvre dans une enceinte sous vide ou remplie d'un gaz neutre si elle constitue la dernière étape du procédé de réalisation des capteurs avant découpe collective, c'est-à-dire si l'étanchéité au niveau des trous métallisés dans le verre a déjà été assurée avec des préformes tenant les températures élevées. Avant la découpe collective, on aura bien entendu retiré la seconde plaquette de silicium.

Le procédé selon l'invention, qui consiste à intercaler une plaquette de silicium micro-usinée sur toute son épaisseur entre d'une part les éléments à assembler d'un capteur de pression et la tension de polarisation qu'exige une soudure thermo-électrique, évite la mise sous tension des métallisations déposées sur le verre et peut être aisément mis en oeuvre en utilisant pour faire les ouvertures dans la seconde plaque de silicium, le masque créé pour la réalisation des membranes flexibles dans la première plaque de silicium. Bien entendu, on peut micro-usiner la seconde plaque de silicium à partir d'un nouveau masque, pourvu que les cavités réalisées soient de même nombre et de dimensions légèrement supérieures à celles des métallisations du verre.

Selon une autre caractéristique de l'invention, il est possible de fabriquer un capteur de pression capacitif formé de deux condensateurs en série et réalisé à partir d'un support rigide en verre scellé entre deux plaquettes de silicium micro-usinées de manière à former deux condensateurs en série dont on détecte les variations de pression.

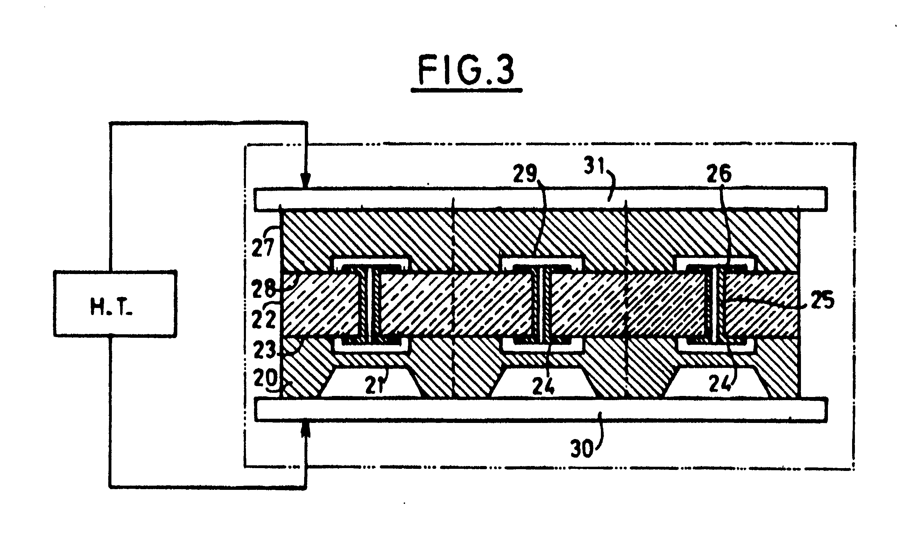

La figure 3 représente le dispositif de mise en oeuvre du procédé de fabrication collective de tels capteurs. Une première plaquette 20 de silicium est micro-usinée de façon à comporter des membranes flexibles 21. Sur une première face 23 d'une plaquette de verre 22, sont déposées des électrodes métallisées 24 qui traversent la plaquette par des trous métallisés 25 pour aboutir à des métallisations 26.

Une seconde plaquette de silicium 27 est micro-usinée sur une de ses faces 28 de façon à réaliser des cavités 29.

Les trois plaquettes sont assemblées de telle sorte d'une part qu'un premier condensateur est réalisé entre chaque membrane 21 de la première plaquette de silicium 20 et chaque électrode 24 de la plaquette de verre 22 et d'autre part qu'un second condensateur est réalisé entre chaque cavité 29 de la seconde plaquette de silicium 27 et chaque métallisation 26 du verre, ces deux condensateurs étant montés en série électriquement.

On place ensuite deux plaques métalliques chauffantes 30 et 31 de part et d'autre de l'ensemble ainsi constitué reliées à une alimentation électrique haute tension.

Dans une première étape, les plaques étant portées à quelques centaines de degrés, la plaque 31 est soumise à un potentiel négatif important par rapport à la plaquette 30, assurant le scellement des plaques 20 et 22 selon le processus décrit auparavant.

Puis les polarités des plaques 30 et 31 sont inversées assurant le scellement des plaquettes 22 et 27.

Pour réaliser des capteurs de pression absolue, on réalise les étapes de soudure dans une enceinte sous vide. Après scellement des trois plaquettes 20, 22 et 27, une étape de découpe collective permet de séparer les différents capteurs.

Ces capteurs de pression capacitifs, d'un type original puisque constitués chacun de deux condensateurs en série, sont obtenus par un procédé également original de soudure thermo-électrique permettant d'assembler deux pièces d'un même matériau - du silicium en l'occurrence - sur les deux faces d'un support en verre sans manipulation, par simple inversion des polarités de ces deux pièces.

Ce type de capteur à deux condensateurs en série délivre un signal électrique représentatif de la somme de la capacité fixe d'un des condensateurs et de la capacité variable, en fonction de la pression de l'autre condensateur, signal délivré directement par des connexions réalisées sur les supports en silicium. Ainsi sont évités les problèmes d'étanchéité liés aux passages des connexions soit à travers le verre, soit à l'interface verre-silicium existant dans le cas des capteurs à un seul condensateur.

## Revendications

1. Procédé de fabrication collective de capteurs de pression capacitifs à partir d'une première plaquette (1) de silicium dans laquelle sont réalisées des membranes sensibles (2) à la pression et d'une plaquette (3) de verre comportant des électrodes (4) métallisées sur une première de ses faces (5) qui sont reliées sur la seconde face (7) par des trous (3) à surfaces métallisées, à des métallisations (6), déposées sur cette seconde face comportant une première étape de mise en contact des deux plaquettes (1 et 3) de façon à faire coïncider chaque membrane avec chaque électrode, caractérisé en ce qu'il comporte de plus les étapes suivantes :

– mise en place sur la seconde face (7) de la plaquette (3) de verre, d'une seconde plaquette (9) de silicium, dans laquelle ont été micro-usinées des ouvertures (90) selon le motif des métallisations (6) de la seconde face (7) de la plaquette (3) de verre et de dimensions au moins égales, en faisant coïncider ces ouvertures avec lesdites métallisations ;

– soudure thermo-électronique à l'aide d'au moins une plaque métallique (10) placée contre la première plaquette (1) de silicium, portée à une température élevée et soumise à une haute tension de façon à polariser positivement la plaquette (1) de silicium et négativement la plaquette (3) de verre ;

– retrait de la seconde plaquette (9) de silicium et de la plaque métallique (10) ;

– découpe collective des différents capteurs.

2. Procédé selon la revendication 1, caractérisé en ce que l'étape de soudure themo-électrique est réalisée dans une enceinte sous vide.

3. Procédé de fabrication collective de capteurs de pression capacitifs comportant une première étape de mise en contact d'une première plaquette (20) de silicium, dans laquelle sont réalisées des membranes (21) sensibles à la pression, avec une plaquette (22) de verre comportant des électrodes (24) métallisées sur une première (23) de ses faces qui sont reliées sur la seconde face par des trous à surfaces métallisées (25) à d'autres électrodes métallisées (26), caractérisé en ce qu'il comporte de plus les étapes suivantes:

– micro-usinage d'une seconde plaquette (27) de silicium de façon à réaliser, sur une de ses faces (28), des cavités (29) ;

– assemblage de la plaquette (22) de verre entre les deux plaquettes (20 et 27) de silicium en faisant coïncider les membranes flexibles (21), les électrodes métallisées (24) et les cavités (29) ;

– mise en place de deux plaques métalliques (30 et 31) de part et d'autre de l'ensemble précédemment constitué ;

– soudure thermo-électrique en portant les plaques métalliques (30 et 31) à une température élevée et en les soumettant l'une à un potentiel positif et l'autre à un potentiel négatif, pendant une première durée puis en inversant les polarités pendant une seconde durée ;

– retrait des deux plaques métalliques (30 et 31);

– découpe collective des différents capteurs formés chacun de deux condensateurs en série.

4. Capteur de pression capacitif réalisé à partir d'une 1ère plaquette (20) de silicium dans laquelle a été micro-usinée une membrane flexible (21) sensible à la pression et d'une plaquette (22) de verre comportant une électrode métallisée (24) sur une de ses faces (23) reliée, par un trou à surface métallisée (25), à une métallisation (26) placée sur sa seconde face (28), caractérisé en ce qu'il comporte une seconde plaquette (27) de silicium dans laquelle a été micro-usinée une cavité (29) et destinée à constituer un condensateur fixe avec la métallisation (26), condensateur relié électriquement en série au condensateur variable constitué par la membrane flexible (21) et l'électrode (24), lesdites première (20) et seconde (27) plaquettes de silicium étant disposées de part et d'autre de la plaquette (22) de verre.

## Patentansprüche

1. Verfahren zur gleichzeitigen Herstellung mehrerer kapazitiver Druckmeßwandler, ausgehend von einer ersten Siliziumplatte (1), in welcher druckempfindliche Membranen (2) ausgebildet sind und von einer Glasplatte (3), welche metallisierte Elektroden (4) auf einer ihrer Seiten (5) trägt, die mit auf der anderen Seite (7) aufgebrachten Metallisationen (6) über Öffnungen (3) mit metallisierten Wänden in Verbindung stehen, wobei in einem ersten Schritt die beiden Platten (1 und 3) dergestalt zusammengefügt werden, daß jede Membran mit je einer Elektrode zusammenfällt, gekennzeichnet durch die folgenden Schritte :

– Aufbringen auf der zweiten Fläche (7) der Glasplatte (3) einer zweiten Siliziumplatte (9), in welcher Öffnungen (90) mindestens gleicher Abmessungen entsprechend der Anordnung der Metallisationen (6) der zweiten Fläche (7) der Glasplatte (3) eingearbeitet sind, wobei diese Öffnungen mit den Metallisationen zusammenfallen,

– thermoelektrisches Verschweißen mit wenigstens einer metallischen Platte (10), die an die erste Siliziumplatte (1) angelegt wird und die auf erhöhte Temperatur gebracht und mit einer Hochspannung derart beaufschlagt wird, daß die Siliziumplatte (1) positiv und die Glasplatte (2) negativ polarisiert werden,

– Entfernen der zweiten Siliziumplatte (9) und der metallischen Platte (10) und

– gleichzeitiges Ausschneiden der verschiedenen Druckmeßwandler.

2. Verfahren nach Anspruch 1, dadurch gekennzeichnet, daß das thermoelektrische Verschweißen in einem Vakuumgefäß erfolgt.

3. Verfahren zur gleichzeitigen Herstellung mehrerer kapazitiver Druckmeßwandler, wobei in einem ersten Schritt eine erste Siliziumplatte (20), welche druckempfindliche Membranen (21) aufweist, mit einer Glasplatte (22) in Berührung gebracht wird, welche metallisierte Elektroden (24) auf ihrer einen Seite (23) aufweist, welche mit auf der anderen Seite aufgebrachten metallisierten Elektroden (26) über Öffnungen (25) mit metallisierten Wänden in Verbindung stehen, gekennzeichnet durch die folgenden Schritte:

– Bearbeiten einer zweiten Siliziumplatte (27) dergestalt, daß auf einer ihrer Seiten (28) Aussparungen (29) entstehen,

– Einfügen der Glasplatte (22) zwischen die beiden Siliziumplatten (20 und 27) derart, daß die flexiblen Membranen (21), die metallisierten Elektroden (24) und die Aussparungen (29) zusammenfallen,

– Anordnen zweier metallischer Platten (30 und 31) beidseits der vorher zusammengefügten Anordnung,

– thermoelektrisches Verschweißen, indem die metallischen Platten (30 und 31) auf eine erhöhte Temperatur gebracht werden und wobei eine mit einem positiven Potential und die andere mit einem negativen Potential während eines ersten Zeitraums beaufschlagt werden, wonach während eines zweiten Zeitraums die Polaritäten vertauscht werden,

– Entfernen der beiden metallischen Platten (30 und 31) und

– gleichzeitiges Ausschneiden der verschiedenen Druckmeßwandler, wobei jeder zwei in Serie geschaltete Kondensatoren darstellt.

4. Kapazitiver Druckmeßwandler, hergestellt ausgehend von einer ersten Siliziumplatte (20), in welcher eine flexible druckempfindliche Membran (21) hergestellt worden ist und von einer Glasplatte (22), welche eine metallisierte Elektrode (24) auf einen ihrer Flächen (23) trägt, welche über eine Öffnung (25) mit metallisierten Wänden mit einer Metallisation (26) in Verbindung steht, die auf der zweiten Fläche (28) angeordnet ist, dadurch gekennzeichnet, daß er eine zweite Siliziumplatte (27) aufweist, in welcher eine Aussparung (29) eingearbeitet ist, die dazu dient, einen festen Kondensator mit der Metallisation (26) zu bilden, welcher elektrisch in Reihe mit einem variablen Kondensator geschaltet ist, der durch die flexible Membran (21) und die Elektrode (24) gebildet wird, wobei die beiden Siliziumplatten (20 und 27) beidseits der Glasplatte (22) angeordnet sind.

## Claims

1. A process for the collective production of capacitive pressure sensors from a first silicon plate (1) in which pressure-sensitive diaphragms (2) are made and a glass plate (3) comprising metallised electrodes (4) on a first of its faces (5) which are connected on the second face (7) by holes (8) with metallised surfaces to metallisation portions (6) deposited on said second face, comprising a first step of bringing the two plates (1 and 3) into contact in such a way as to cause each diaphragm to coincide with each electrode, characterised in that it further comprises the following steps :

– positioning on the second face (7) of the glass plate (3) of a second silicon plate (9) in which openings (90) have been micro-machined in accordance with the pattern of the metallisation portions (6) on the second face (7) of the glass plate (3) and of dimensions which are at least equal, causing said openings to coincide with said metallisation portions ;

– thermo-electric welding by means of at least one metal plate (10) disposed against the first silicon plate (1) and raised to an elevated temperature and subjected to a high voltage so as positively to bias the silicon plate (1) and negatively bias the glass plate (3) ;

– withdrawal of the second silicon plate (9) and the metal plate (10) ; and

– collective cutting-out of the different sensors.

2. A process according to claim 1 characterised in that the thermo-electric welding step is carried out in an enclosure under vacuum.

3. A process for the collective production of capacitive pressure sensors comprising a first step of bringing a first silicon plate (20) in which pressure-sensitive diaphragms (21) are made into contact with a glass plate (22) comprising metallised electrodes (24) on a first (23) of its faces which are connected on the second face by way of holes with metallised surfaces (25) to other metallised electrodes (26) characterised in that it further comprises the following steps:

– micro-machining of a second silicon plate (27) so as to produce cavities (29) on one of its faces (28) ;

– assembly of the glass plate (22) between the two silicon plates (20 and 27), causing the flexible diaphragms (21), the metallised electrodes (24) and the cavities (29) to coincide ;

– positioning of two metal plates (30 and 31) on respective sides of the assembly formed as set forth above ;

– thermo-electric welding by raising the metal plates (30 and 31) to an elevated temperature and subjecting one to a positive potential and the other to a negative potential for a first period and then reversing the polarities for a second period;

– withdrawal of the two metal plates (30 and 31); and

– collective cutting-out of the different sensors which are each formed by two capacitors in series.

4. A capacitive pressure sensor produced from a first silicon plate (20) in which a pressure-sensitive flexible diaphragm (21) has been micro-machined and a glass plate (22) comprising a metallised electrode (24) on one of its faces (23) connected by a hole with metallised surface (25) to a metallisation portion (26) disposed on the second face (28) characterised in that it comprises a second silicon plate (27) in which a cavity (27) has been micro-machined, intended to constitute a fixed capacitor with the metallisation portion (26), the capacitor being electrically connected in series with the variable capacitor formed by the flexible diaphragm (21) and the electrode (24), said first and second silicon plates (20, 27) being disposed on respective sides of the glass plate (22).

**FIG.1**

Alimentation HT

**FIG.2**

# FIG.3

EP 0 296 034 B1